# EUROPEAN PATENT APPLICATION

(11) **EP 4 641 767 A1**
(43) Date of publication of application: **29.10.2025**
(21) Application number: 23929829.2
(22) Date of filing: 18.09.2023
(51) Int. Cl.: H01M 10/617, H01M 10/615, H01M 10/6556, H01M 10/6568

(54) **BATTERY PACK AND ELECTRIC APPARATUS**

(30) Priority: 30.03.2023 CN 202320673931 U
(71) Applicant: BYD Company Limited, Shenzhen, Guangdong 518118 (CN)
(72) Inventor: CHEN, Xuemei, Shenzhen, Guangdong 518118 (CN); ZHONG, Rijun, Shenzhen, Guangdong 518118 (CN); ZHANG, Yajun, Shenzhen, Guangdong 518118 (CN); SU, Hongchao, Shenzhen, Guangdong 518118 (CN); CAI, Yaomin, Shenzhen, Guangdong 518118 (CN)
(74) Representative: Aldridge, Henry Alexander
(86) International application number: PCT/CN2023/119486
(87) International publication number: WO 2024/198255

(57) **Abstract**

A battery pack (10) and an electric apparatus are disclosed. The battery pack (10) includes a battery cell set (100), a heat exchange assembly (200), and a heating member (300). The battery cell set (100) includes a plurality of battery cells (101) arranged along a first direction. The battery cell (101) includes a battery cell body (1011), a first electrode terminal (1012), and a second electrode terminal (1013). The battery cell body (1011) extends along a second direction. The first direction is perpendicular to the second direction. The heat exchange assembly (200) is located on a side of the battery cell set (100) and is configured to perform heat exchange on the battery cell set (100). The heat exchange assembly (200) includes a plurality of medium flow channels (201) arranged along the second direction. The medium flow channel (201) extends along the first direction. The heating member (300) is located on a side of the battery cell set (100) and is configured to heat the battery cell set (100). The heating member (300) includes a plurality of heating sections (301) arranged along the second direction. The heating section (301) extends along the first direction.

## Description

### CROSS REFERENCE TO RELATED APPLICATIONS

This application claims priority to Chinese Patent Application No. 2023206739312, filed on March 30, 2023 and entitled "BATTERY PACK AND ELECTRIC APPARATUS", which is incorporated herein by reference in its entirety.

### TECHNICAL FIELD

This application relates to the field of new energy, and in particular, to a battery pack and an electric apparatus.

### BACKGROUND

In the related technologies, with the continuous development of new energy technologies, new energy vehicles have become one of the most promising industries in the world. A battery pack is a crucial component of a new energy vehicle. Due to spatial limitations, battery cells in the battery pack are arranged tightly and emit a large amount of heat during operation, and thus are prone to temperature differences. If the heat cannot be dissipated timely and effectively to balance the battery temperature, a capacity of the battery is decreased, performance of the power battery is degraded, and a service life is shortened. Moreover, instability of the battery pack is caused, leading to thermal runaway. In addition, in a low temperature environment, the capacity, power, and discharge efficiency of the battery pack are clearly reduced, shortening the service life and making it difficult to perform charging and discharging. Therefore, the battery pack needs to be heated or thermally insulated to maintain the temperature of the battery cells in the battery pack and prevent an excessively low temperature, to ensure normal driving of a vehicle. Therefore, temperature has great impact on comprehensive performance of the battery pack. In order to use battery energy safely and efficiently, a reliable battery heat management technology is urgently needed at present to enable the temperature of the battery pack to remain within an appropriate range and ensure heat uniformity of the battery cells in the battery pack.

### SUMMARY

This application aims to resolve at least one of the technical problems in the existing technologies. Therefore, an objective of this application is to provide a battery pack. The battery pack has an advantage of a controllable temperature, allowing the temperature to be flexibly controlled based on an actual application scenario, and allowing a temperature difference of battery cells in the battery pack to be reduced, thereby enabling the battery pack to have good heat uniformity.

This application further provides an electric apparatus using the foregoing battery pack.

A first aspect of this application provides a battery pack, including: a battery cell set, a heat exchange assembly, and a heating member, where the battery cell set includes a plurality of battery cells arranged along a first direction; and the battery cell includes a battery cell body, a first electrode terminal, and a second electrode terminal, where the battery cell body extends along a second direction, and the first direction is perpendicular to the second direction; the heat exchange assembly is located on a side of the battery cell set and is configured to perform heat exchange on the battery cell set, where the heat exchange assembly includes a plurality of medium flow channels arranged along the second direction, and the medium flow channel extends along the first direction; and the heating member is located on a side of the battery cell set and is configured to heat the battery cell set, where the heating member includes a plurality of heating sections arranged along the second direction, and the heating section extends along the first direction.

According to the battery pack provided in the first aspect of this application, through the cooperation between the heat exchange assembly and the heating member, flexible temperature control can be performed based on an actual application scenario. When the battery cell set needs to be cooled, a cooling function of the heat exchange assembly may be used to cool the heat exchange assembly. When the battery cell set needs to be heated, a heating function of the heat exchange assembly may be used to heat the battery cell set, or the heating member may be used to heat the battery cell set, or both the heating function of the heat exchange assembly and the heating member may be used to heat the battery cell set, to meet heating and cooling requirements in various different application scenarios. In addition, an extension direction of the medium flow channel in the heat exchange assembly is perpendicular to an extension direction of the battery cell body, an arrangement direction of the plurality of medium flow channels is perpendicular to an arrangement direction of the plurality of battery cells, an extension direction of the heating section in the heating member is perpendicular to the extension direction of the battery cell body, and an arrangement direction of the plurality of heating sections is perpendicular to the arrangement direction of the plurality of battery cells, which facilitates temperature control at same positions of different battery cells. When there is a relatively large temperature difference between different positions of the battery cell, heat exchange can be performed on the same positions of the plurality of battery cells in a targeted manner to improve overall heat uniformity of the battery cells, thereby improving performance and a service life of the battery cell set.

A second aspect of this application provides an electric apparatus, including the battery pack according to the first aspect of this application.

Additional aspects and advantages of this application are to be partially provided in the following descriptions, and partially become clear from the following descriptions, or are understood from practice of this application.

### BRIEF DESCRIPTION OF DRAWINGS

FIG. 1 is an exploded view of a battery pack according to embodiments of this application;
FIG. 2 is a top view of a battery pack according to embodiments of this application;
FIG. 3 is an exploded view of a heat exchange assembly according to embodiments of this application; and
FIG. 4 is an exploded view of a heating member according to embodiments of this application.

Reference numerals in the specification are as follows:
battery pack 10;
battery cell set 100, battery cell 101, battery cell body 1011, first electrode terminal 1012, second electrode terminal 1013;
heat exchange assembly 200, medium flow channel 201, first collecting pipe assembly 202, second collecting pipe assembly 203, vapor chamber 204;
heating member 300, heating section 301, heating core 302, insulation film 303, adhesion layer 304, first insulation film 3031, second insulation film 3032;
tray 400, tray body 401, edge beam 402;
cover plate 500, bottom protection plate 600.

### DESCRIPTION OF EMBODIMENTS

Embodiments of this application are described in detail below, and examples of the embodiments are shown in the accompanying drawings. Same or similar reference numerals throughout the accompanying drawings indicate same or similar components or components having the same or similar functions. The embodiments described below with reference to the accompanying drawings are exemplary and are intended to explain this application only, but are not construed as a limitation on this application.

The following describes a battery pack 10 according to embodiments of this application with reference to the accompanying drawings.

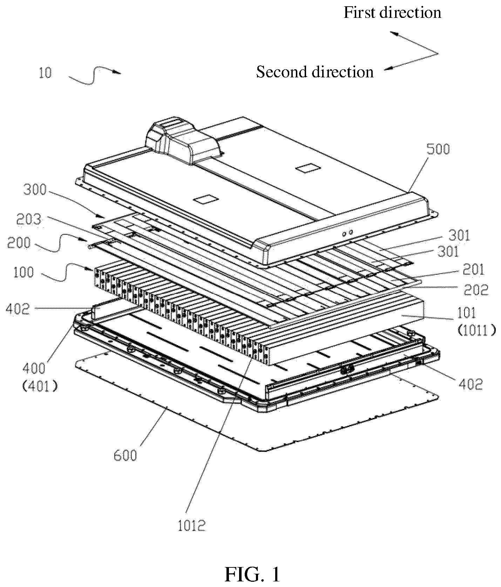

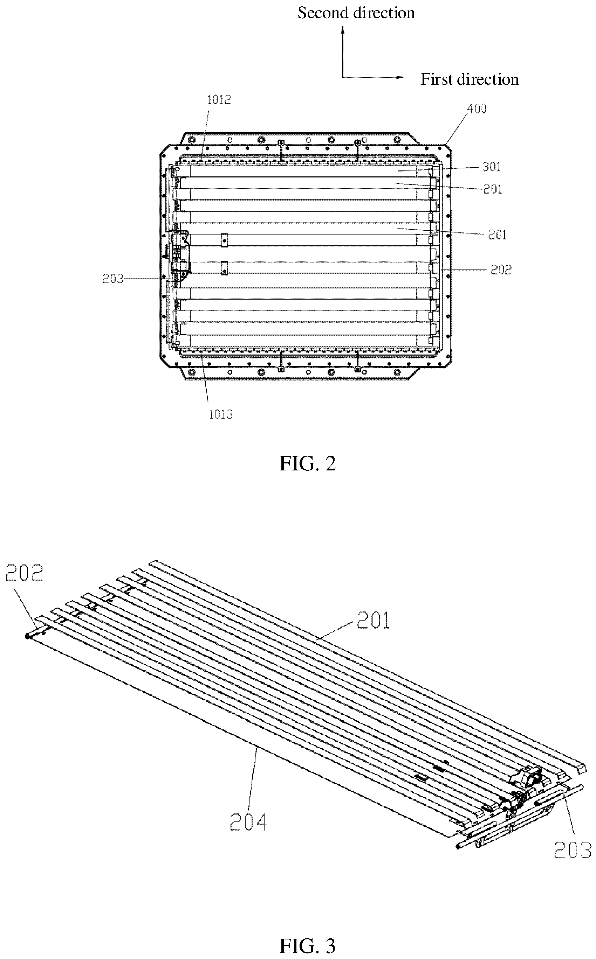

As shown in FIG. 1 and FIG. 2, the battery pack 10 according to the embodiments of this application includes a battery cell set 100, a heat exchange assembly 200, and a heating member 300.

The battery cell set 100 includes a plurality of battery cells 101 arranged along a first direction. The battery cell 101 includes a battery cell body 1011, a first electrode terminal 1012, and a second electrode terminal 1013. The battery cell body 1011 extends along a second direction. The first direction is perpendicular to the second direction. That is, an arrangement direction of the plurality of battery cells 101 is perpendicular to an extension direction of the battery cell body 1011.

The heat exchange assembly 200 is located on a side of the battery cell set 100, and may be configured to perform heat exchange on the battery cell set 100. The heat exchange assembly 200 has a cooling and/or heating function. In a high temperature condition, when the battery cell set 100 needs to be cooled, the cooling function of the heat exchange assembly 200 may be used to cool the battery cell set 100. In a low temperature condition, when the battery cell set 100 needs to be heated, the heating function of the heat exchange assembly 200 may be used to heat the battery cell set 100. The heat exchange assembly 200 includes a plurality of medium flow channels 201. A heat exchange medium may be transported through the medium flow channel 201 to perform heat exchange on the battery cell set 100. The medium flow channel 201 extends along the first direction. The plurality of medium flow channels 201 are arranged along the second direction. An extension direction of the medium flow channel 201 is perpendicular to an extension direction of the battery cell body 1011. An arrangement direction of the plurality of medium flow channels 201 is perpendicular to an arrangement direction of the plurality of battery cells 101. That is, the medium flow channels 201 may all be correspondingly disposed at same positions of the plurality of battery cells 101, which facilitates temperature control at the same positions of the different battery cells 101. When there is a relatively large temperature difference between different positions of the battery cell 101, heat exchange may be performed on the same positions of the plurality of battery cells 101 in a targeted manner to improve overall heat uniformity of the battery cells 101, thereby improving performance and a service life of the battery cell set 100.

The heating member 300 is located on a side of the battery cell set 100, and may be configured to heat the battery cell set 100. In a low temperature condition, when the battery cell set 100 needs to be heated, the heating member 300 may be used to heat the battery cell set 100. The heating member 300 includes a plurality of heating sections 301. The heating section 301 extends along the first direction. In addition, the plurality of heating sections 301 are arranged along the second direction. That is, an extension direction of the heating section 301 is perpendicular to the extension direction of the battery cell body 1011, and an arrangement direction of the plurality of heating sections 301 is perpendicular to the arrangement direction of the plurality of battery cells 101. That is, the heating sections 301 may all be correspondingly disposed at same positions of the plurality of battery cells 101, which facilitates temperature control at the same positions of the different battery cells 101. When there is a relatively large temperature difference between different positions of the battery cell 101, heating may be performed on the same positions of the plurality of battery cells 101 in a targeted manner to improve overall heat uniformity of the battery cells 101, thereby improving the performance and the service life of the battery cell set 100.

In this application, through the cooperation between the heat exchange assembly 200 and the heating member 300, flexible temperature control can be performed based on an actual application scenario. When the battery cell set 100 needs to be cooled, the cooling function of the heat exchange assembly 200 may be used to cool the heat exchange assembly 100. When the battery cell set 100 needs to be heated, the heating function of the heat exchange assembly 200 may be used to heat the battery cell set 100, or the heating member 300 may be used to heat the battery cell set 100, or both the heating function of the heat exchange assembly 200 and the heating member 300 may be used to heat the battery cell set 100, to meet heating and cooling requirements in various different application scenarios. In addition, the extension direction of the medium flow channel 201 in the heat exchange assembly 200 is perpendicular to the extension direction of the battery cell body 1011, the arrangement direction of the plurality of medium flow channels 201 is perpendicular to the arrangement direction of the plurality of battery cells 101, the extension direction of the heating section 301 in the heating member 300 is perpendicular to the extension direction of the battery cell body 1011, and the arrangement direction of the plurality of heating sections 301 is perpendicular to the arrangement direction of the plurality of battery cells 101, which facilitates temperature control at the same positions of the different battery cells 101. When there is a relatively large temperature difference between different positions of the battery cell 101, heat exchange can be performed on the same positions of the plurality of battery cells 101 in a targeted manner to improve the overall heat uniformity of the battery cells 101, thereby improving the performance and the service life of the battery cell set 100.

In some implementations of this application, the first electrode terminal 1012 and the second electrode terminal 1013 are respectively located at two ends of the battery cell body 1011 that extend along the second direction. In a high temperature environment, when the battery cell set is in an operating state, the first electrode terminal 1012 and the second electrode terminal 1013 at both ends of the battery cell 101 emit more heat than the battery cell body 1011. Therefore, the temperature at both ends of the battery cell 101 is higher than that in the middle of the battery cell 101. In this case, in terms of cooling of the battery cell 101, priority is given to cooling of the two ends of the battery cell 101. In this case, the cooling function of the heat exchange assembly 200 may be used to cool the battery cell set 100. A medium flow channel 201 located at an outermost position along the second direction may be used as a flow channel inlet, and a flow channel 201 located in the middle may be used as a flow channel outlet. In this way, the heat exchange medium flows first through the two higher-temperature ends of the battery cell 101, and then flows through the lower-temperature middle of the battery cell 101, so that a temperature difference between each of the two ends and the middle of the battery cell 101 can be reduced, thereby improving the heat uniformity of the battery cell 101. In a low temperature environment, the battery cell 101 needs to be heated, and the heating function of the heat exchange assembly 200 may be used to heat the battery cell set 100, to prevent the temperature of the battery cell 101 from being excessively low and ensure that the battery cell set 100 can work normally. In this case, the heat exchange medium in the heat exchange assembly 200 flows in an exactly opposite direction. The heat exchange medium flows first through the middle of the battery cell 101 and then through the two ends of the battery cell 101 to heat the battery cell 101.

In some implementations of this application, the first electrode terminal 1012 and the second electrode terminal 1013 are respectively located at two ends of the battery cell body 1011 that extend along the second direction, and the heating section 301 is disposed at each of two ends of the battery cell set 100 that correspond to the first electrode terminal 1012 and the second electrode terminal 1013. When the battery cell set 100 needs to be heated, based on the heating mode in which the heat exchange medium of the heat exchange assembly 200 flows first through the middle of the battery cell 101 and then through the two ends of the battery cell 101, within an initial period of time after heating is enabled, the temperature at the two ends of the battery cell 101 rises at a speed slower than that of the battery cell body 1011, and therefore, the temperature at the two ends of the battery cell 101 is lower. In this case, the heating member 300 may be used to compensate for the low temperature of the region through which the heat exchange medium flows later in time, thereby improving the heating efficiency and the overall heat uniformity of the battery cell 101.

In some other implementations of this application, the heating sections 301 may be further spaced apart on an entire surface of the battery cell set 100, and the plurality of heating sections 301 are spaced apart along the second direction, thereby further improving the heating efficiency. The plurality of heating sections 301 may be independent of each other or may be connected successively in series. When the plurality of heating sections 301 are independent of each other, a position of the battery cell set 100 with an excessively low temperature locally may be heated individually. When the plurality of heating sections 301 are connected in series, it is convenient to uniformly heat the battery cell set 100, thereby improving the heating effect of the battery cell set 100.

In some implementations of this application, the heat exchange assembly 200 and the heating member 300 are located on a same side of the battery cell set 100, and the heating member 300 is disposed on a side of the heat exchange assembly 200 away from the battery cell set 100. This can reduce a risk of a short circuit due to contact between the heating member 300 and the battery cell 101 (a housing of the battery cell is charged) caused by a foreign body, between the heating member 300 and the battery cell 101, piercing an insulation film of the battery cell 101 or an insulation film of the heating member 300, thereby improving the safety of the battery pack 10.

In some implementations of this application, the heat exchange assembly 200 and the heating member 300 are located on a same side of the battery cell set 100, and the heating member 300 may alternatively be disposed on a side of the heat exchange assembly 200 close to the battery cell set 100. In this case, for safety considerations of the battery pack 10, it is necessary to strictly mold and process the heat exchange assembly to avoid burrs and foreign objects. In other implementations of this application, the safety of the battery pack 10 can also be improved by increasing a thickness of the insulation film of the battery cell 101 and a thickness of the insulation film of the heating member 300, and by using an insulation material with higher hardness and better insulation performance as the insulation film of the battery cell 101 or the insulation film of the heating member 300.

In some implementations of this application, as shown in FIG. 3, the heat exchange assembly 200 includes a first collecting pipe assembly 202 and a second collecting pipe assembly 203 spaced apart along the first direction, and the plurality of medium flow channels 201 arranged along the second direction are disposed between the first collecting pipe assembly 202 and the second collecting pipe assembly 203. The medium flow channel 201 includes a first end and a second end that are disposed opposite to each other. The first end of the medium flow channel 201 is in communication with the first collecting pipe assembly 202, and the second end of the medium flow channel 201 is in communication with the second collecting pipe assembly 203, to form a loop. The first collecting pipe assembly 202 may include a medium inlet pipe and a medium outlet pipe. The heat exchange assembly 200 further includes a vapor chamber 204. The vapor chamber 204 is disposed on a side, close to the battery cell set 100, of the plurality of medium flow channels 201 arranged along the second direction, and the plurality of medium flow channels 201 arranged along the second direction are fixedly connected to the vapor chamber 204. The plurality of medium flow channels 201 can perform heat exchange on the battery cell set 100 by using the vapor chamber 204, to achieve heating or cooling of the battery cell set 100. The heat exchange assembly 200 in this implementation is a harmonica pipe heat exchange assembly, having advantages of low costs and high production efficiency.

In some other implementations of this application, the heat exchange assembly 200 includes a flow channel plate and a connecting plate, and the flow channel plate and the connecting plate jointly define the medium flow channel 201. In this case, the flow channel plate and the connecting plate may be formed by stamping and brazing. The heat exchange assembly 200 in this implementation is a stamped and brazed heat exchange assembly, having advantages of high overall strength and a good heat exchange effect.

In some implementations of this application, the heating section 301 is disposed on a surface on a side of the medium flow channel 201 away from the battery cell set 100, that is, the heating section 301 is correspondingly disposed on the medium flow channel 201. The heating section 301 may be fixed to the medium flow channel by adhesive means or hot pressing. When the heat exchange assembly 200 is a harmonica pipe heat exchange assembly, the medium flow channel 201 is equivalent to a harmonica pipe, and the heating section 301 is disposed on the harmonica pipe. A surface of the harmonica pipe has good flatness, facilitating the fixed connection of the heating section 301 to the medium flow channel. In addition, the heating section 301 is not in direct contact with the battery cell set 100, achieving high safety of the battery pack 10. When the heat exchange assembly 200 is a brazed plate heat exchange assembly, a surface of the flow channel plate of the heat exchange assembly 200 is not flat and is usually disposed on a side facing away from the battery cell set 100, and a surface of the connecting plate of the heat exchange assembly 200 is flat and is usually disposed on a side close to the battery cell set 100. In this case, the heating section 301 is disposed on the surface on the side of the medium flow channel 201 away from the battery cell set 100, that is, the heating section 301 is disposed at a raised position of the flow channel plate of the heat exchange assembly 200. Because the surface of the flow channel plate is not flat, in order to increase the stability and firmness of the connection between the heating section 301 and the flow channel plate, the surface of the flow channel plate may be filled with an adhesive layer to improve flatness and heat conductivity of the surface of the flow channel plate, thereby improving connection reliability between the heating section 301 and the brazed plate heat exchange assembly.

In some implementations of this application, the heating section 301 and the medium flow channel 201 are disposed at each of the two ends of the battery cell set 100 that correspond to the first electrode terminal 1012 and the second electrode terminal 1013, and the heating section 301 is disposed on the side of the medium flow channel 201 away from the battery cell set 100. In this case, for a problem that the first electrode terminal 1012 and the second electrode terminal 1013 at the two ends of the battery cell 101 are prone to a temperature difference with the battery cell body 1011 in the middle of the battery cell 101, when the battery cell 101 needs to be cooled, a medium flow channel 201 located at an outermost position along the second direction may be used as a flow channel inlet, and a medium flow channel 201 located in the middle is used as a flow channel outlet. In this way, the heat exchange medium flows first through the two higher-temperature ends of the battery cell 101, and then flows through the low-temperature middle of the battery cell 101, so that a temperature difference between each of the two ends of the battery cell 101 and the middle of the battery cell 101 can be reduced, thereby improving the heat uniformity of the battery cell 101. On the contrary, when the battery cell 101 needs to be heated, the heat exchange medium in the heat exchange assembly 200 flows in an exactly opposite direction. The heat exchange medium flows first through the middle of the battery cell 101 and then through the two ends of the battery cell 101 to heat the battery cell 101. Within an initial period of time after heating is enabled, the temperature at the two ends of the battery cell 101 rises at a speed slower than that of the battery cell body 1011, and therefore, the temperature at the two ends of the battery cell 101 is lower. In this case, the heating member 300 may be used to compensate for the low temperature at the two ends of the battery cell 101.

In some implementations of this application, the heating section 301 is disposed between two adjacent ones of the medium flow channels 201. In a specific embodiment of this application, the heating section 301 may be fixed between the two adjacent medium flow channels 201 by adhesive means or hot pressing. When the heat exchange assembly 200 is a harmonica pipe heat exchange assembly, the medium flow channel 201 is equivalent to a harmonica pipe, and the heating section 301 is disposed at a position between two adjacent harmonica pipes, that is, the heating section 301 is disposed on the vapor chamber 204 between the two adjacent harmonica pipes. A surface of the vapor chamber 204 has good flatness, facilitating the fixed connection of the heating section 301. In addition, the heating section 301 is not in direct contact with the battery cell set 100, achieving high safety of the battery pack 10. When the heat exchange assembly 200 is a brazed plate heat exchange assembly, a surface of the flow channel plate of the heat exchange assembly 200 is not flat and is usually disposed on a side facing away from the battery cell set 100, and a surface of the connecting plate of the heat exchange assembly 200 is flat and is usually disposed on a side close to the battery cell set 100. In this case, the heating section 301 is disposed between two adjacent ones of the medium flow channels 201, that is, the heating section 301 is disposed at a recessed position of the flow channel plate of the heat exchange assembly 200. Because the surface of the flow channel plate is not flat, in order to increase the stability and firmness of the connection between the heating section 301 and the flow channel plate, the surface of the flow channel plate may be filled with an adhesive layer to improve flatness and heat conductivity of the surface of the flow channel plate, thereby improving connection reliability between the heating section 301 and the brazed plate heat exchange assembly.

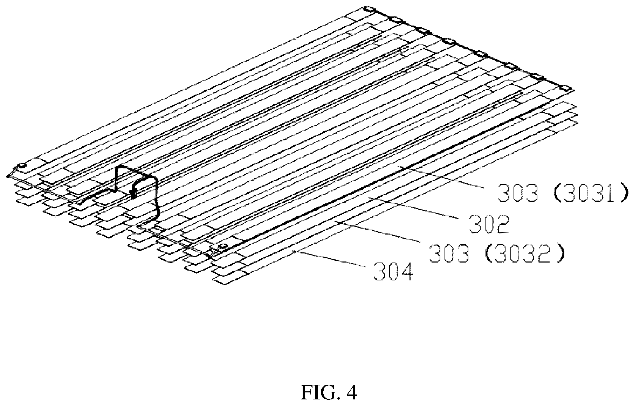

In some implementations of this application, as shown in FIG. 4, the heating section 301 includes a heating core 302 and an insulation film 303, and the heating core 302 is packaged within the insulation film 303. According to some embodiments of this application, the insulation film 303 may include a first insulation film 3031 and a second insulation film 3032, and the heating core 302 is sealed between the first insulation film 3031 and the second insulation film 3032. According to some embodiments of this application, the heating core 302 and the insulation film 303 may be bonded by hot pressing by using an adhesion layer 304, thereby forming an integrated heating section 301. An outermost layer of the heating section 301 may be coated with a bonding layer (adhesion layer 304), and the heating section 301 may be adhered to the heat exchange assembly 200 by using the bonding layer. The outermost layer of the heating section 301 may alternatively be coated with a thermosetting adhesive layer (adhesion layer 304). In this case, the heating section 301 may be hot pressed onto the heat exchange assembly 200 by using a hot pressing process. A material of the heating core 302 may be metal, a carbon-based polymer with a PTC effect, or ceramic. The heating core made of a metal material has low costs, and a heating circuit can be etched or die-cut. The heating core made of a carbon-based polymer or ceramic has a PTC effect, and can achieve an advantage of self-control over temperature in a heating process. Each type of heating core 302 can be designed with different power densities in different regions based on a requirement, and divisional design can be performed based on an overall package structure, to implement a function of a small temperature difference and flexible design. A material of the insulation film 303 may be polyimide (PI), polyethylene terephthalate (PET), mica, or the like.

In some implementations of this application, the battery pack 10 further includes a tray 400 and a cover plate 500. The tray 400 and the cover plate 500 jointly define an accommodation space for accommodating the battery cell set 100, the heat exchange assembly 200, and the heating member 300. The cover plate 500 is fixedly connected to the tray 400. The cover plate 500 and the tray 400 can protect and fix the battery cell set 100.

In some implementations of this application, the heat exchange assembly 200 may be disposed on a side of the battery cell set 100 away from the tray 400, and the heating member 300 is disposed on a side of the heat exchange assembly 200 away from the battery cell set 100. This can further reduce a risk of a short circuit due to contact between the heating member 300 and the battery cell 101 (a housing of the battery cell is charged) caused by a foreign body, between the heating member 300 and the battery cell 101, piercing an insulation film of the battery cell 101 or an insulation film of the heating member 300, thereby improving the safety of the battery pack 10.

In some implementations of this application, the tray 400 includes a tray body 401 and an edge beam 402, and the edge beam 402 is disposed on the tray body 401. A plurality of edge beams 402 are arranged and spaced apart along the first direction, and the battery cell set 100 is disposed between two adjacent ones of the edge beams 402. As shown in FIG. 1, two edge beams 402 are spaced apart along the first direction and the battery cell set 100 is disposed between the two edge beams 402. The edge beam 402 is configured to apply a pre-tightening force to the battery to prevent the battery cell set 100 from moving, and can limit expansion of the battery cell set 100 to some extent. Generally, the edge beam 402 is disposed on a side of a large surface of the battery cell set 100 to increase a contact area with the battery and improve a restraint capability on the battery. In some other implementations of this application, a plurality of edge beams 402 arranged along the second direction may be further included. For example, two edge beams 402 are spaced apart along the second direction, two edge beams 402 are spaced apart along the first direction, four edge beams 402 are connected end to end to form a frame, and the battery cell set 100 is placed in the frame. The edge beams 402 disposed along the first direction or the edge beams 402 disposed along the second direction apply a pre-tightening force to the battery cell set 100 to reduce movement of the battery cell set 100. In other embodiments of this application, the edge beams may alternatively cross each other to form a grid, and a battery cell set 100 may be disposed in each grid.

In some implementations of this application, the battery pack 10 further includes a bottom protection plate 600. The bottom protection plate 600 is disposed on a side of the tray 400 away from the battery cell set 100 to improve a protection capability at the bottom of the tray 400.

The embodiments of this application further disclose an electric apparatus, including the foregoing battery pack 10. The electric apparatus may be an energy storage cabinet, an electric vehicle, or the like.

In the description of this specification, the description with reference to the terms such as "one embodiment", "some embodiments", "an example embodiment", "an example", "a specific example", or "some examples" means that the specific features, structures, materials, or characteristics described with reference to the embodiment or example are included in at least one embodiment or example of this application. In this specification, the schematic expression of the above terms does not necessarily refer to the same embodiment or example. Moreover, the specific features, structures, materials, or characteristics described may be combined in a suitable manner in any one or more embodiments or examples.

Although the embodiments of this application have been shown and described, a person of ordinary skill in the art can understand that various changes, modifications, replacements, and variants may be made to these embodiments without departing from the principle and purpose of this application, and the scope of this application is subject to the claims and the equivalents of the claims.

## Claims

1. A battery pack (10), comprising: a battery cell set (100), a heat exchange assembly (200), and a heating member (300), wherein
the battery cell set (100) comprises a plurality of battery cells (101) arranged along a first direction; and the battery cell (101) comprises a battery cell body (1011), a first electrode terminal (1012), and a second electrode terminal (1013), wherein the battery cell body (1011) extends along a second direction, and the first direction is perpendicular to the second direction;
the heat exchange assembly (200) is located on a side of the battery cell set (100) and is configured to perform heat exchange on the battery cell set (100), wherein the heat exchange assembly (200) comprises a plurality of medium flow channels (201) arranged along the second direction, and the medium flow channel (201) extends along the first direction; and
the heating member (300) is located on a side of the battery cell set (100) and is configured to heat the battery cell set (100), wherein the heating member (300) comprises a plurality of heating sections (301) arranged along the second direction, and the heating section (301) extends along the first direction.

2. The battery pack (10) according to claim 1, wherein the first electrode terminal (1012) and the second electrode terminal (1013) are respectively located at two ends of the battery cell body (1011) that extend along the second direction, and the heating section (301) is disposed at each of two ends of the battery cell set (100) that correspond to the first electrode terminal (1012) and the second electrode terminal (1013).

3. The battery pack (10) according to claim 1 or 2, wherein the heat exchange assembly (200) and the heating member (300) are located on a same side of the battery cell set (100), and the heating member (300) is disposed on a side of the heat exchange assembly (200) away from the battery cell set (100).

4. The battery pack (10) according to any one of claims 1 to 3, wherein the heat exchange assembly (200) comprises a first collecting pipe assembly (202) and a second collecting pipe assembly (203) spaced apart along the first direction, and the plurality of medium flow channels (201) arranged along the second direction are disposed between the first collecting pipe assembly (202) and the second collecting pipe assembly (203); and
the heat exchange assembly (200) further comprises a vapor chamber (204), the vapor chamber (204) is disposed on a side, close to the battery cell set (100), of the plurality of medium flow channels (201) arranged along the second direction, and the plurality of medium flow channels (201) arranged along the second direction are fixedly connected to the vapor chamber (204).

5. The battery pack (10) according to any one of claims 1 to 4, wherein the heat exchange assembly (200) comprises a flow channel plate and a connecting plate, and the flow channel plate and the connecting plate jointly define the medium flow channel (201).

6. The battery pack (10) according to any one of claims 1 to 5, wherein the heating section (301) is disposed on a surface on a side of the medium flow channel (201) away from the battery cell set (100).

7. The battery pack (10) according to any one of claims 1 to 5, wherein the heating section (301) is disposed between two adjacent ones of the medium flow channels (201).

8. The battery pack (10) according to claim 1, wherein the heating section (301) comprises a heating core (302) and an insulation film (303), and the heating core (302) is packaged within the insulation film (303).

9. The battery pack (10) according to any one of claims 1 to 8, further comprising: a tray (400) and a cover plate (500), wherein the tray (400) and the cover plate (500) jointly define an accommodation space for accommodating the battery cell set (100), the heat exchange assembly (200), and the heating member (300).

10. The battery pack (10) according to claim 9, wherein the heat exchange assembly (200) is disposed on a side of the battery cell set (100) away from the tray (400), and the heating member (300) is disposed on the side of the heat exchange assembly (200) away from the battery cell set (100).

11. The battery pack (10) according to claim 9, further comprising a bottom protection plate (600), wherein the bottom protection plate (600) is disposed on a side of the tray (400) away from the battery cell set (100).

12. An electric apparatus, comprising the battery pack (10) according to any one of claims 1 to 11.
